# EUROPEAN PATENT SPECIFICATION

(11) **EP 4 344 946 B1**
(45) Date of publication and mention of the grant of the patent: **14.05.2025**
(21) Application number: 23193380.5
(22) Date of filing: 25.08.2023
(51) Int. Cl.: B60N 2/30, B60R 21/02

(54) **ADJUSTABLE PARTITION ASSEMBLY AND VEHICLE**
EINSTELLBARE TRENNWANDANORDNUNG UND FAHRZEUG
ENSEMBLE DE SÉPARATION RÉGLABLE ET VÉHICULE

(30) Priority: 16.09.2022 NL 2033063
(43) Date of publication of application: 03.04.2024
(73) Proprietor: Snoeks Automotive B.V., 2153 NC Nieuw-Vennep (NL)
(72) Inventor: Cappendijk, Johan, 2153NC Nieuw- Vennep (NL); Smit, Kenny, 2153NC Nieuw- Vennep (NL)
(74) Representative: Arnold & Siedsma

(56) References cited:
- FR-A1- 2 845 954
- FR-A1- 2 876 637

## Description

The present invention relates to an adjustable partition assembly, particularly for separating a cargo compartment and a passenger compartment of a vehicle, preferably a transport vehicle. The invention also relates to a vehicle provided with such adjustable partition assembly.

Small delivery vans or trucks, also known also light commercial vehicles are transport vehicles that are being used to transport cargo. Such vehicles are also known in the art as N category vehicles. Similar vehicles for transporting passengers are also available, which belong to the M category. These vehicles (or vans) can be comprised of a double cabin construction wherein one part of the van is a passenger compartment and the other part is a cargo compartment, and wherein these compartments are being separated by a separation wall separating the cargo from the passengers. Category N are considered motor vehicles with at least four wheels designed and constructed for the carriage of goods, Category M are considered motor vehicles with at least four wheels designed and constructed for the carriage of passengers and comprising no more than eight seats in addition to the driver's seat (i.e., regular passenger cars including SUVs, MPVs, small vans, etc). A sliding door at the side of the vehicle provides access to the passenger compartment. These so called double cabin vehicles may serve to transport goods and at the same time transport a limited number of people. The passenger compartment contains at least two passenger seat assemblies, whereby the front seat assembly is provided for the driver and possibly one or two additional passengers. The rear seat(s) are arranged to be able to further transport three or four passengers, depending on the lay-out of the vehicle. Factory supplied seating constructions are fixed to the floor body of the van for support of the seating, retaining the seats and passengers during an accident, and further durability of the seating construction.

Partition assemblies for separating a cargo compartment and a passenger compartment of a vehicle with a movable separation wall and/or foldable rear seats are known in the art. These assemblies are specifically designed for a certain vehicle model as these have to be integrated with existing bodywork, onboard systems (e.g., electrical systems, hydraulic systems, airbags, lighting, et cetera), and vehicle dimensions. This requires - on the one hand - a tedious design process for the partition assembly, which must be designed specifically for a certain model of vehicle, and - on the other hand - significant modification of each vehicle that is fitted with said assembly. For instance, each vehicle model can have differently dimensioned and/or positioned C- and D-pillars to which the known moveable separation walls and/or rear seats are mounted. FR2845954 shows an adjustable partition assembly for separating a cargo compartment and a passenger compartment of a vehicle, the assembly comprising: rails, a base frame and a seating frame.

It is an object of the present invention, amongst other objects, to mitigate at least part of the aforementioned disadvantages of the prior art.

In view thereof, according to a first aspect of the invention, an adjustable partition assembly for separating a cargo compartment and a passenger compartment of a vehicle, preferably a transport vehicle, is provided. The assembly comprises rails configured to be mounted to a floor of the vehicle, a base frame attached to the rails and movable in a forward and a rearward direction of the vehicle on said rails, a seating frame pivotally mounted to the base frame, and having a seat portion and a backrest portion pivotally connected to the seat portion, a separation panel provided on the rearward facing side of the backrest portion and configured to be movable relative to the backrest portion for closing a gap between a top portion of the backrest portion and a roof of the vehicle, a first retaining element, configured to be mounted to the roof of the vehicle, with a receiving slot for receiving a top portion of the separation panel, the assembly having at least a first seating position and a stowed position, wherein: in the first seating position, the seat and backrest portions are positioned for seating a passenger of the vehicle on the respective seating surfaces thereof, the top portion of the separation panel extends in the receiving slot of the first retaining element, and the base frame is positioned at a first location along the rails, and in the stowed position, the seat and backrest portions are pivoted relative to the base frame such that their respective seating surfaces substantially face the forward direction, and the base frame is positioned at a stowing location along the rails, which is at a distance from the first location in the forward direction.

The assembly of the first aspect does not require direct continuous engagement with the sides of the vehicle. Particularly, the rails on which the base frame and the seating frame are placed are mounted to the floor, i.e., the interior floor, of the vehicle, and the (first) retaining element is mounted to the roof, i.e., the interior ceiling, of the vehicle. In other words, the continuous contact points of the assembly with the vehicle are the floor and ceiling (i.e., roof) and not the sides. This allows for the assembly to be used for various vehicle models without substantial modification of the constructions thereof, as it does not require adaptation (e.g., mounting brackets or the like) for the interior sidewalls of the various vehicles, that may vary in shape and dimension. Further, the vehicle does not require significant modification. The rails can be mounted, optionally via a suitable adapter, to mounting points in the floor that may be provided by the manufacturer. Further, providing the retaining element is straightforward such that it can easily be implemented for various vehicle models without much effort, as its simplest form requires only a receiving slot in which the separation panel can be extended in the (first) seating position of the assembly. The rails further allow for adjustment of the (first) seating position, particularly the (first) location along the rails, depending on the vehicle model. For instance, in a shorter vehicle model the (first) location along the rails (along with the (first) retaining element mounted to the ceiling) may be placed more towards the front as compared to a longer vehicle model. Also, the legroom available for the passengers making use of the seating frame can be adjusted with minor effort in the same manner. In addition, existing onboard systems of the vehicle require little to no modifications. For instance, the assembly does not prevent the use of standard curtain airbags, which has traditionally been a problem for adjustable partition assemblies. In addition, the assembly does not require extensive modification to the bodywork, such that electrical or hydraulic systems present within the bodywork (e.g., wires, lighting, tubes) are not affected by the installation of the assembly. Hence, the assembly of the first aspect effectively mitigates at least part of the aforementioned disadvantages of the prior art.

According to the first aspect an adjustable partition assembly is thus provided, which allows for trading the space occupied by the rear seats (or bench) of a double cabin vehicle for extra cargo space, and vice versa. Particularly, in the stowed position, the seating surfaces of the seat and backrest portions are faced forward and are generally moved closely to the rear sides of the front seats (or bench). Thereby, extra space is created in the cargo compartment by sacrificing the use of the rear seats in a double cabin vehicle. In case of a vehicle with more than two rows of seats, generally the most rearward row of seats is thus sacrificed for additional cargo space.

Generally, a transport vehicle has a cargo compartment and a passenger compartment. The passenger compartment provides seating and space for at least the driver of the transport vehicle and the required control elements that must be controlled by the driver (e.g., steering wheel, acceleration and braking pedals, et cetera). In the case of a double cabin transport vehicle, a second (or third, or further) row of seats is provided behind the seats of the driver in order to accommodate more passengers. The cargo compartment is located behind the most rearward seats, and provides space for transporting cargo, such as tools, packages, et cetera. Safety regulations require for a separation between the cargo compartment and the passenger compartment. In general, a fixed separation wall is provided between the passenger and cargo compartments, to prevent shifting cargo from interfering with the passengers and objects in the passenger compartment. In the case of an adjustable partition assembly, this separation is still required in all positions/configurations of the assembly. The present assembly can ensure safety whilst providing the flexibility to trade cargo space for passenger space, and vice versa, as will become clear from the present invention. In other words, the present assembly forms the aforementioned separation wall, at least by means of the seating frame and the separation panel.

The aforementioned rails are preferably elongate rails, that are mounted rigidly to the floor of a vehicle, particularly behind the first row of seats of the vehicle. The elongate rails preferably extend in the fore-aft direction of the vehicle, i.e., the forward-rearward direction of the vehicle, or in longitudinal direction of the vehicle. The rails may be mounted to the floor by a plurality of fastening elements, such as bolts. Additionally or alternatively, the rails may be welded or otherwise rigidly fastened to the floor of the vehicle. The rails are thus mounted to an interior surface of the floor of the vehicle. The rails may comprise two or more rail elements that are provided parallel to each other on the floor of the vehicle.

The aforementioned base frame is movably attached to the rails, and can be moved along at least part of the length of the rails, preferably in forward and rearward direction of the vehicle. The base frame may comprise rollers or sliders by which the base frame is movable along the rails, which may comprise bearings to ease movement along the rails. The base frame provides a movable platform (movable along the rails particularly) on which the seating frame, and potentially further components, may be mounted.

The aforementioned seating frame comprises a seat portion and a backrest portion. The seating frame is pivotally mounted to the base frame, such that it is rotatable with respect to the base frame. Preferably, the seating frame is rotatable relative to the base frame along a first rotation axis, that is preferably perpendicular to the longitudinal direction of the rails. Particularly, the seat portion may be pivotable relative to the base frame. The seat portion comprises a seating surface on which a person may be seated when the seat portion is in a seating position, wherein the seating surface is mostly facing upwardly. The seating surface of the seat portion may be aimed slightly, e.g., by a few degrees, in the rearward direction such that a person sitting thereon is urged slightly rearwardly such that the back of the person comes in contact with the seating surface of the backrest portion, which is pivotally connected to the seat portion. Preferably, the backrest portion is pivotally connected to, or near, a rear edge of the seat portion. The backrest portion preferably pivots in an opposite direction relative to the pivoting direction of the seat portion. This means that when the seat surface pivots forwardly, i.e., the seating surface thereof is pivoted so as to be facing forward, the backrest pivots backwardly so as to remain more or less upright. Hence, when the seat portion is pivoted forwardly, the top portion of the backrest portion moves toward the ceiling (i.e., roof) of the vehicle due to the backrest portion being attached to seat portion. Preferably, the seating frame is designed such that a gap distance between the sidewalls of the vehicle and the lateral sides of the seating frame is between 0 and 10 cm, preferably at most 4 cm. Said gap distance is preferably maintained in both the (first/second) seating position(s) and the stowed position.

Further, the seating frame may comprise mounting points for safety belt systems. The seating surfaces of the seating frame are preferably provided with a suitable material on which a person may be seated, which provides support and comfort to the person (e.g., any suitable padding). The sides of the seat and backrest portions opposite to the seating surfaces are preferably reinforced in such manner that they can act as separation wall elements that prevent cargo from the cargo compartment from interfering with the passenger compartment. Accordingly, the seating frame can be made of appropriate material of appropriate strength, such as a metal, e.g., steel, or a composite material, e.g., fiber-reinforced plastic such as carbon fiber. The assembly, particularly the safety belt systems and/or seating frame and/or base frame and/or separation panel, et cetera, are designed so as to retain passengers and the frame itself in place during frontal impact (e.g., ECE Regulations R14, R94), rear impact (e.g., ECE Regulations R17), and side impact (e.g., ECE Regulations R11, R95).

The aforementioned separation panel bridges the gap between the top part of the backrest portion of the seating frame. As explained above, the distance between the top part of the backrest portion and the ceiling of the vehicle may change when the seating frame (e.g., the seat portion) is pivoted relative to the base frame. Accordingly, the separation panel is movable relative to the backrest portion. The separation panel is provided on a rearward facing side of the backrest portion, and is preferably movable in parallel to the backrest portion such that it sits generally relatively flush to the backrest portion so as to not take up a significant amount of cargo space. The separation panel may be movable by any suitable mechanism, such as hydraulic or pneumatic pistons or (electric) motors with appropriate transmission (e.g., rack and pinion or the like), or a manually adjustable mechanism utilizing for instance springs, pulleys, cables, handles and/or levers. In use the separation panel is thus configured to extend from the backrest portion, substantially to the ceiling (i.e., roof) of the vehicle in all possible positions of the assembly. The gap between the top part of the backrest portion to the ceiling is generally larger in the (first) seating position(s) of the assembly, such that the top portion (e.g., the upper edge) of the separation panel extends further away from the top portion of the backrest portion. Accordingly, in the seating position of the assembly the separation panel is more susceptible to damage caused by forces (e.g., shifting cargo) than in the stowed position, as in the seating position the lever arm of the separation panel is larger (i.e., distance between the top edge of the separation panel and the backrest portion where the separation panel is attached) such that the torque applied on the separation panel by the forces is larger. This is caused, at least partially, by the assembly not (continuously and/or structurally) engaging with the side walls, for example the C or D pillar, of the vehicle (e.g., no guide elements in the side walls for the separation panel). The (first) retaining element mitigates this issue at least partially.

The aforementioned retaining element, mounted to the roof (i.e., interior ceiling) of the vehicle, has a receiving slot for receiving a top portion (e.g., an upper edge) of the separation panel. The retaining element may be positioned such that in the (first) seating position(s) of the assembly, the top portion of the separation panel slots in the receiving slot. This mitigates the aforementioned problem of increased torque on the panel as compared to the stowed position of the assembly, wherein the separation panel is retracted to a larger extent relative to the backrest portion. Accordingly, in the stowed position a further retaining element may not be required for supporting the top portion of the separation panel. Nevertheless, a bumper or position stop. or even another retaining element, may be provided for additional support in the stowed position. The retaining element may be mounted to the ceiling of the vehicle with appropriate fastening elements, such as bolts. Additionally or alternatively, the retaining element may be welded or otherwise rigidly fastened to the roof of the vehicle. The receiving slot may optionally extend partially in the bodywork of the vehicle so as to provide additional support (i.e., additional pathways for dissipating forces). The receiving slot may be an elongate slot, in the transverse direction of the vehicle (i.e., substantially perpendicular to the longitudinal direction of the vehicle). The slot may for instance be a U-shaped element, or may be comprised of two elongate plate-shaped elements placed in parallel and at a distance from each other. In the latter case, the slot (e.g., U-shape) is completed by the ceiling of the vehicle or the like. The receiving slot is preferably approximately the same length as the length of the upper edge (i.e., top portion) of the separation panel so as to provide as much support as possible.

In the aforementioned first seating position of the assembly, the seat and backrest portions of the seating frame are positioned such that a person may be seated on the seating surfaces thereof. Preferably, the seating surface of the seat portion is then facing mainly upwardly, as explained above. The backrest portion is then preferably in an upright position, optionally slightly reclined for comfort. Accordingly, the seat portion is then preferably substantially oriented horizontally, and the backrest portion substantially vertically. However, for comfort, the seat and backrest portions can naturally be angled slightly. In the seating position of the assembly, the base frame is positioned at a first location along the rails. The first location may be chosen such that enough room is available for accommodating the seat portion in its seating position as well as the legs of a passenger sitting on the seat (i.e., the space between the front edge of the seat portion and the back of the seats in front of the assembly).

In the aforementioned stowed position of the assembly, the seat and backrest portions are pivoted such that their seating surfaces face forward. This may entail that the seating frame changes from an L-shape in the seating position, to an I-shape in the stowed position. In other words, the seat portion is pivoted from a mainly horizontal orientation to a mainly vertical orientation, whilst the backrest portion remains substantially upright. Furthermore, in the stowed position, the base frame is moved relative to the aforementioned first location, in the forward direction of the vehicle. In other words, the base frame is moved away from the cargo compartment and towards the passenger compartment, so as to provide additional cargo space in the stowed position. Preferably, the base frame is moved forward to such an extent that the seating surfaces of the seating frame are in contact or close vicinity to the rear sides of the seats in front of the assembly (e.g., the first row of seats of the vehicle). In the stowed position, the rearward facing side of the backrest portion and the now rearward facing side of the seat portion act as a separation wall between the cargo compartment and the passenger compartment (along with the separation panel).

Preferably, the assembly of the first aspect further comprises a second retaining element, configured to be mounted to the roof of the vehicle at a distance from the first retaining member in the forward direction, with a receiving slot for receiving a top portion of the separation panel, the assembly having a second seating position different from the first seating position, wherein: in the second seating position, the seat and backrest portions are positioned for seating a passenger of the vehicle on the respective seating surfaces thereof (preferably similar to the above regarding the first seating position), the top portion of the separation panel extends in the receiving slot of the second retaining element, and the base frame is positioned at a second location along the rails at a distance from the first location in the forward direction.

Accordingly, the second seating position provides slightly less space in the passenger compartment as compared to the first seating position in benefit of the cargo space. For instance, this may entail less legroom for the passengers that are seated on the seating frame as compared to the first seating position. The modular nature of the assembly thus provided allows for two (or more) seating positions, whilst also providing a stowed position wherein the rear seats are stowed for the benefit of extra cargo space. By having the option of varying the length of the rails and/or varying the location and amount of retaining element(s), a highly versatile partition assembly is obtained.

Preferably, in the assembly of the first aspect, in the stowed position, an extension distance between the top portion of the separation panel and top portion of the backrest portion is smaller than the extension distance in the first seating position and/or the second seating position. As explained above, the top portion of the backrest portion moves toward the ceiling of the vehicle when the assembly is moved from the seating position(s) to the stowed position, such that the gap present between the top portion of the backrest portion and the ceiling of the vehicle becomes smaller. Accordingly, in the stowed position, the top portion of the separation panel may not be located in a receiving slot of a retaining element, as the separation panel is retracted relative to the backrest as compared to the position of the separation panel in the seating position of the assembly.

Preferably, in the assembly of the first aspect, the separation panel is movable substantially in parallel to the backrest portion, preferably wherein the separation panel comprises a housing, such that the separation panel is extendible and retractable in said housing. The housing may be rigidly attached to the backrest portion of the seating frame, or may form an integral part thereof.

Preferably, in the assembly of the first aspect, the separation panel is at least partially made of glass or acrylic. Accordingly, the separation panel is transparent such that a driver of the vehicle may utilize the rearview mirror to look from the passenger compartment, through the cargo compartment, and possibly out of a back window of the vehicle. Particularly when glass or acrylic is used as separation panel, instead of a stronger material such as metal, the retaining element ensures structural rigidity of the separation panel in the seating position(s) of the assembly.

Preferably, in the assembly of the first aspect, in the first seating position and/or the second seating position, the seat portion is pivoted relative to the base frame, such that its seating surface faces in a substantially upward direction. As explained above, the seating surface of the seat portion in then suitable for seating a person. The substantially upward direction is to be interpreted as being a mainly upward direction opposite the force of gravity, which may be slightly angled for comfort and/or safety of the passenger. For instance, the seat may be angled slightly backward to prevent the passenger from sliding forwardly on the seat portion in the case of hard braking of the vehicle.

Preferably, the assembly of the first aspect further comprises an adjustable headrest mounted to and movable relative to the top portion of the backrest portion. The adjustable headrest are preferably movable by actuating means. Preferably, the adjustable headrests are automatically retracted relative to the backrest portion when the assembly is moved to the stowed position. For instance, the movement of the adjustable headrest may be coupled, directly or indirectly, with the movement of the separation panel, such that in case the separation panel moves downward (i.e., retracts towards the backrest) the headrest also moves downward. This may prevent damage to the adjustable headrest by contact with the ceiling (i.e., roof) of the vehicle, and/or damage to the ceiling due to the headrest.

Preferably, the assembly of the first aspect further comprises driving means for moving the base frame in the forward and the rearward direction of the vehicle on the rails, preferably wherein the driving means are electrically powered. The driving means may be formed by any suitable driving mechanism, such as a rack and pinion, a worm gear, a linear actuator, or the like.

Preferably, the assembly of the first aspect further comprises an actuator for pivoting the seating frame relative to base frame. Preferably, the actuator pivots the seat portion of the seating frame relative to the frame, wherein the backrest portion of the seating frame is preferably connected with the base frame and/or seat portion in such manner that the backrest is appropriately pivoted when the seat portion is pivoted. Particularly, when the backrest portion is pivotally connected to a rear edge (or near a rear edge) of the seat portion, a link may further be provided which is pivotally connected to a bracket on the backrest and the base frame, such that a pivoting movement of the seat portion automatically causes a pivoting movement of the backrest portion. Additionally or alternatively, a further actuator may be provided for pivoting the backrest portion.

Optionally, the backrest portion may be adapted to be pivoted rearwardly, preferably by means of a drive mechanism, and particularly an electrically powered drive mechanism. For instance, it may be possible to pivot the backrest portion to such extent that its seating surface forms a flat surface with the seating surface of the seat portion, e.g., for sleeping purposes. In this case the separation panel may be fully retracted in the backrest portion. Additionally, the backrest portion may comprise an upper backrest portion and a lower backrest portion, wherein the upper backrest portion may be pivotally connected (preferably at its top portion, in the normal seating position) to the seating frame (preferably the top portion of the seating frame). Accordingly, the upper backrest portion can be pivoted so as to elongate the aforementioned flat surface, i.e., such that the upper backrest portion extends outwardly from the top portion of the seating frame (particularly the backrest portion thereof). Accordingly, a full-size bed can be realized. Additionally or alternatively, the upper backrest portion may be slidable relative to the backrest portion, so as to be extendable therefrom. Preferably, the backrest portion is movable (e.g., pivotable and/or slidable) relative to the seating frame by means of a driving means, which are preferably electrically powered. Accordingly, the assembly is particularly suitable for a transport vehicle used for camping purposes, or the like.

Preferably, in the assembly of the first aspect, the seat portion of the seating frame further comprises a protection panel configured to extend, in the first seating position and/or the second seating position, between the seat portion and the floor of the vehicle. In the seating position, the seat portion is positioned substantially horizontally as explained above. In order to prevent cargo from moving under the seat portion, from the cargo compartment to the passenger compartment, the protection panel is provided. The protection panel may also simultaneously form a link between the seat portion and the base frame, and may be used to pivot the seat portion relative to the base frame.

Preferably, in the assembly of the first aspect, in the stowed position, the seat portion is pivoted relative to the base frame such that a bottom surface thereof, opposite its seating surface, substantially faces the rearward direction and substantially extends between the backrest portion and the floor of the vehicle. As explained above, the bottom surface of the seat portion faces backwards, towards the cargo compartment, in the stowed position, such that the bottom surface acts as a barrier between the cargo compartment and the passenger compartment.

Preferably, in the assembly of the first aspect, the separation panel is movable by means of a driving means, such as an electric motor or the like.

The assembly may further comprise a controller, configured to command various components of the assembly, such as the actuator for pivoting the seating frame relative to base frame, the driving means for moving the base frame in the forward and the rearward direction, and/or the driving means for moving the separation panel. The controller may be instructed by a user, by means of an input device, to move the assembly to the first seating position, the second seating position, and/or the stowed position. The input device may for instance be a remote controller, an application on a computing device (e.g., an app on a smartphone), or a touch screen or button(s). An input device may for instance be provided in near the driver of the vehicle, such as in the dashboard of the vehicle.

The assembly may further comprise an occupancy sensor, which is configured to detect a person in or near the seating frame. Preferably, when the occupancy sensor detects a person on or near the seating frame, movement of the assembly is inhibited or stopped. For instance, the occupancy sensor may be connected to the controller, and the controller may be programmed such that the assembly cannot be moved between its positions in case the occupancy sensor detects a person.

A load detection sensor, such as a camera, photocell, pressure plate, or the like, may be provided on the rearward side of the backrest or in another location in the cargo compartment for detecting cargo behind the assembly. Preferably, when the load detection sensor detects cargo near the assembly, which may cause a collision when the assembly is moved, movement of the assembly is inhibited or stopped. For instance, the load detection sensor may be connected to the controller, and the controller may be programmed such that the assembly cannot be moved between its positions in case the load detection sensor detects cargo that may interfere with movement of the assembly.

The seating frame of the assembly may be adapted for the specific purpose. For instance, the seating frame may be configured to seat one person, two persons, three persons, four persons, or another number of persons.

Preferably, in the assembly of the first aspect, the assembly further has a sleeping position, wherein: the backrest portion is pivoted in the rearward direction so as to form a substantially flat sleeping surface by means of the seating surfaces of the seat portion and the backrest portion. Further preferably, the backrest portion comprises an upper backrest portion which is adjustable, preferably pivotable and/or slidable, relative to the backrest portion, so as to elongate the backrest portion in the sleeping position of the assembly. Accordingly, the assembly is particularly suitable for a transport vehicle used for camping purposes, or the like.

In a second aspect of the invention, a vehicle is provided, preferably a transport vehicle having a cargo compartment and a passenger compartment, wherein the vehicle comprises an adjustable partition assembly according to the first aspect of the invention. It is preferred that the vehicle is a light commercial vehicle. A light conmercial vehicle is for instance a delivery van or the like. Preferably, the vehicle is an electric vehicle, such as an electric car or van.

The vehicle may also be provided with multiple partition assemblies according to the first aspect.

For instance, multiple partition assemblies may be placed behind each other (placement in front-to-rear direction) or next to each other (placement in the lateral direction), or a combination thereof.

The vehicle may be provided with an adapter, which is directly mountable to existing mounting locations in the floor of the vehicle, wherein the adjustable partition assembly is subsequently mounted to the adapter, such that the assembly is then mounted to the floor of the vehicle.

Preferably, in the vehicle of the second aspect, the adjustable partition assembly does not have a structural connection with the sidewalls and/or side structure of the vehicle. Because the assembly is not engaged with the sidewalls of the vehicle, the assembly has an improved freedom to move and the movements of the adjustable partition assembly into the stowed or seating positions are simplified and more user friendly, while maintaining the high safety requirements of the seating constructions of the vehicle.

The present invention will hereinafter be elucidated by means of illustrative examples with reference to the attached drawings, wherein:
FIG. 1 shows a schematic side view of a vehicle comprising an adjustable partition assembly in a first seating position;
FIG. 2 shows a schematic side view of a vehicle comprising an adjustable partition assembly in a second seating position;
FIG. 3 shows a schematic side view of a vehicle comprising an adjustable partition assembly in a stowed position;
FIG. 4 shows a perspective view of the front of an adjustable partition assembly:
FIG. 5 shows a perspective view of the rear of an adjustable partition assembly; and
FIG. 6 shows a schematic rear view of an adjustable partition assembly.

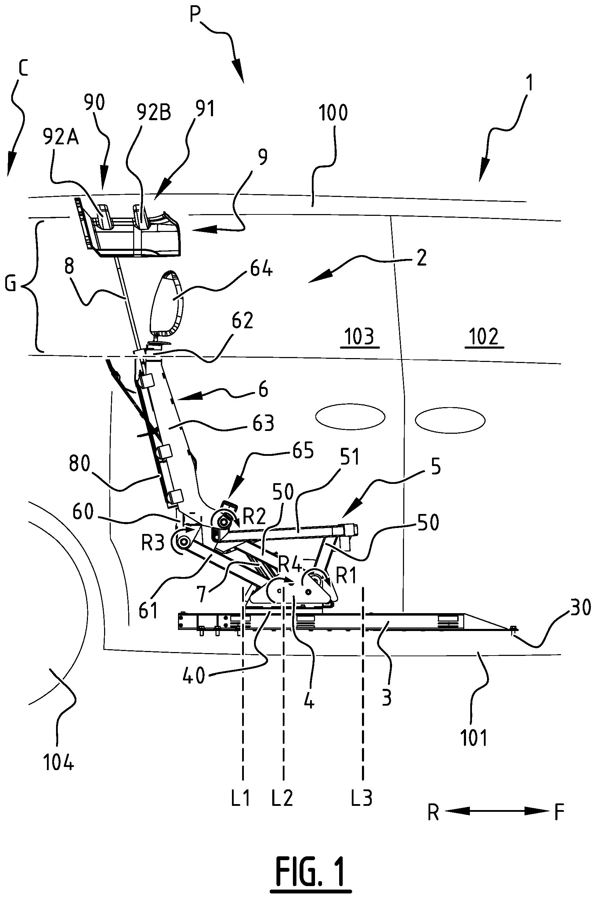

In FIG. 1 part of a vehicle 1, particularly a van, is shown in a schematic side view. The vehicle 1 has a roof 100, also referred to as ceiling 100, a floor 101, a front side door 102, a rear side door 103, and wheels 104 (one shown). The vehicle 1 may be an electric vehicle, such as an electric van. The vehicle 1 is provided with an adjustable partition assembly 2, which separates its passenger compartment P from its cargo compartment C.

The assembly 2 is mounted to the floor 101 of the vehicle 1 through rails 3. The rails 3 is for instance fastened to the floor 101 by means of bolts 30. The rails 3 extend in forward F and rearward R directions of the vehicle 1. The assembly 2 is further provided with a base frame 4, which is movable along the rails 3 in forward F and rearward R directions. The base frame 4 is connected with the rails 3 through any suitable connection means 40, which may comprise bearings for smoot movement along the rails 3.

A seating frame is provided which comprises a seat portion 5 and a backrest portion 6, also referred to as seat 5 and backrest 6. The seat 5 is pivotally connected to the base frame 4 by means of links 50 that may be rotated about rotation axis R1. The backrest 6 is pivotally connected to the seat 5, and may be rotated about rotation axis R2. The backrest 6 also comprises bracket 60, through which the backrest 6 is connected to the base frame 4 by means of link 61, which is pivotable at one end about rotation axis R3 and at its other end about rotation axis R4. The rotation of both the seat 5 together with the backrest 6 may be effected by actuator 7.

The seating frame comprises the necessary components for seating persons. The backrest 6 is provided with backrest padding (not shown) on its seating surface 63, and the seat 5 is provided with seat padding (not shown) on its seating surface 51. The backrest 6 also comprises an adjustable headrest 64 and necessary components for safety belts 65.

Attached to the backrest 6 is the separation panel 8. The panel 8 is movable substantially in parallel to the backrest 6, and can be extended from and retracted in a panel housing 80. The separation panel 8 generally extends from the upper portion 62 of the backrest 6 to the ceiling 100 of the vehicle 1. The panel 8 thus bridges the gap G between the top portion 62 of the backrest and the ceiling 100.

The assembly 2 further provides a retaining element 9. which in this case consists of a first retaining element 90 and a second retaining element 91 in an integral construction. The retaining element 9 comprises receiving slots 92A, 92B. for receiving a top portion, i.e., a top edge, of the separation panel 8. The retaining element 9 is mounted to the ceiling 100 of the vehicle 1, for instance by fastening means (not shown).

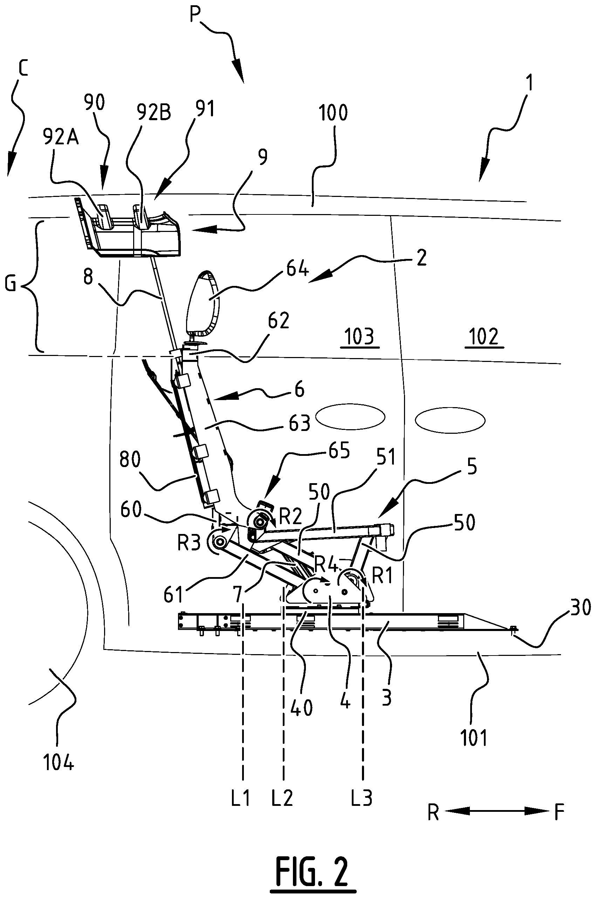

In FIG. 1, the assembly is in a first seating position, wherein the base frame 4 is located at a first location L1 along the rails 3, and the top portion of the separation panel 8 is located in the first receiving slot 92A. In FIG. 2, the assembly is placed in a second seating position, wherein the base frame 4 is located at a second location L2 along the rails 3, and the top portion of the separation panel 8 is located in the second receiving slot 92B. When the assembly 2 moves from the first seating position (FIG. 1) to the second seating position (FIG. 2) the separation panel 8 is first retracted from the first receiving slot 92A such that the assembly 2 can be moved from the first location L1 to the second location L2, and then extended again in the second receiving slot 92B.

Thus in in the second seating position (FIG. 2) less legroom is available for the passengers in the passenger compartment P and more cargo space is available in the cargo compartment C as compared to the first seating position (FIG. 1). The legroom is the distance between the seat 5 and the front seat (not shown) in front of the assembly 2.

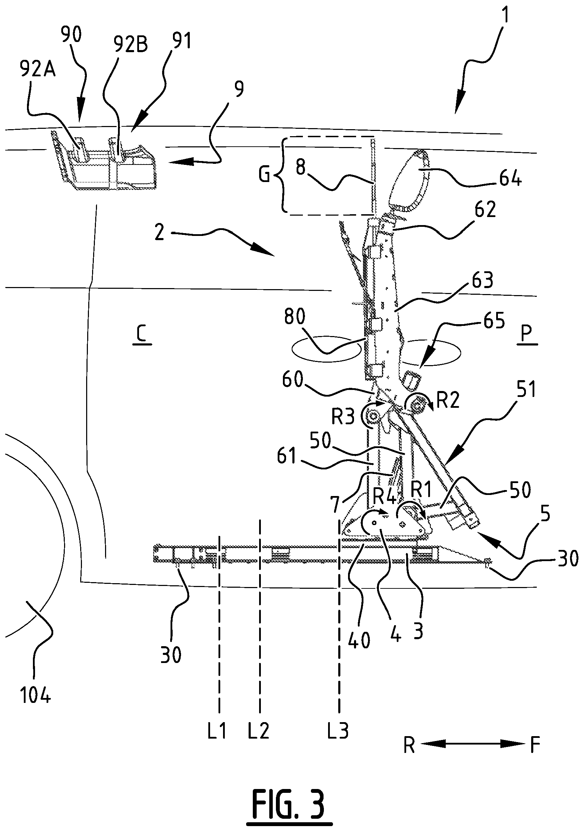

In FIG. 3, a stowed position of the assembly 2 is shown, wherein the base frame 4 is moved to a third location L3 which is forward from the first and second locations L1, L2. Moving the assembly 2 to this position enlarges the cargo compartment C to a relatively large extent.

In the stowed position, the seat 5 is pivoted forward about rotation axis R1. At the same time, the movement of the backrest 6 is constrained through link 61 connected to its bracket 60, such that the backrest 6 is rotated about rotation axis R2 in an opposite direction to the rotation of the seat 5. As such, the backrest 6 is placed in an elevated position as compared to the first and second seating positions (FIGS. 1 and 2). Therefore, the gap G between the top portion 62 of the backrest 6 and the ceiling 100 of the vehicle 1 is smaller in the stowed position as compared to the first and second seating positions. This means that the separation panel 8 is retracted into its housing 80, such that it extends a shorter distance from the top 62 of the backrest 6 as compared to in the first and second seating positions. This means that forces acting on the panel 8 in the stowed position of the assembly 2 produce a smaller torque on the panel 8 than the same forces acting upon the panel 8 in the seating positions, as the lever arm is longer due to the larger gap G. This means that a retaining element 9 with receiving slot 92 is not required in the stowed position as shown in FIG. 3.

In the stowed position the seat 5, backrest 6 and separation panel 8 together provide a secure separation wall between the cargo compartment C and the passenger compartment P.

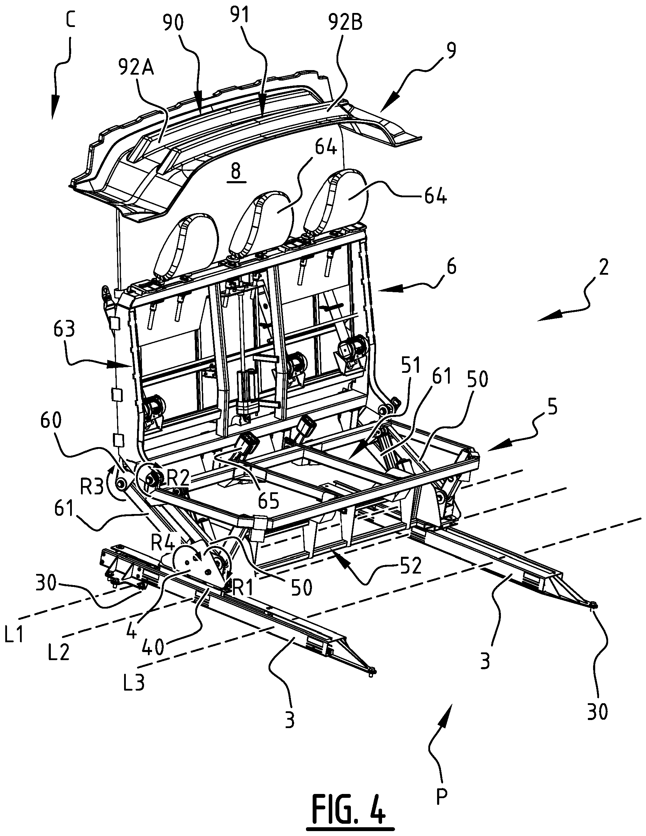

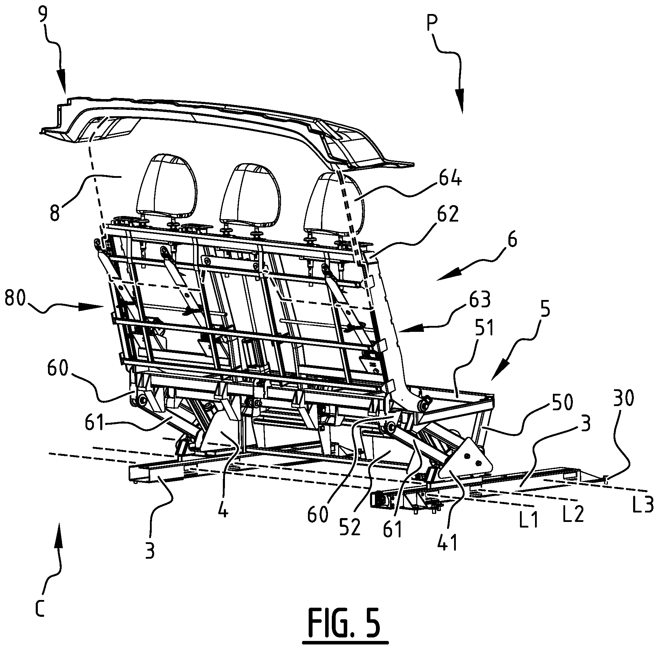

In the seating position, as for instance shown in perspective in FIGS. 4 and 5, the seat 5 cannot provide the secure separation between the cargo space C and the passenger space P as it is pivoted to a near horizontal orientation. Accordingly, the seat 5 is also provided with a protection panel 52, which prevents cargo from moving from the cargo space C to the passenger space P in the seating positions of the assembly 2.

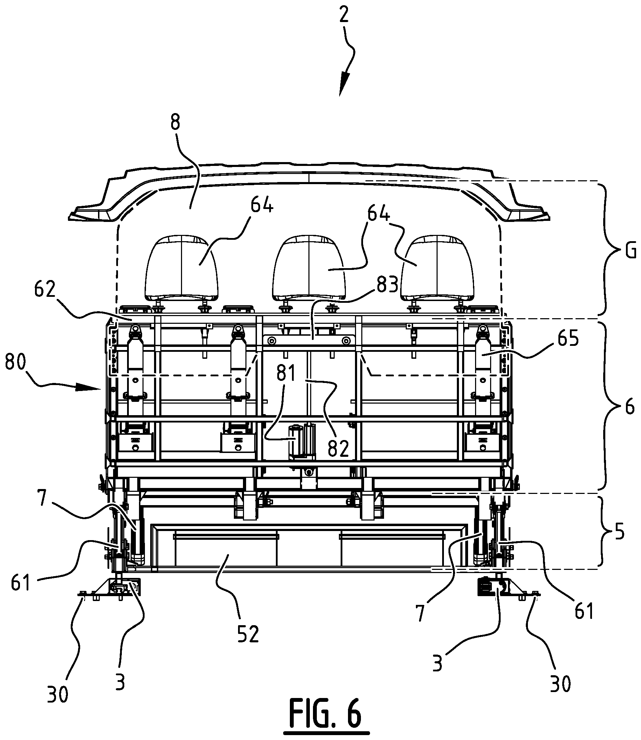

In FIG. 6 a rear view of the assembly 2 is shown. In the housing 80 of the separation panel 8, a drive mechanism 81 is provided for moving the separation panel 8, i.e., for extending and retracting the panel 8 in its housing 8. The drive mechanism 81 is connected to the panel 8 through a rod 82 and a bracket 83 mounted to the panel 8. The panel 8 may be made of glass or acrylic, whilst the bracket 83 may be made of a metal or the like. The rod 82 can for instance be a telescopic member that is driven by the drive mechanism 81 to save additional space in the construction.

The protection panel 52 is clearly shown as preventing cargo from the cargo space C from moving under the seat 5 to the passenger space P, such that the assembly 2 provides a secure adjustable separation between said spaces C, P.

The illustrative embodiments or examples described above are not to be construed as limiting the scope of protection, which is determined by the appended claims.

## Claims

1. Adjustable partition assembly (2) for separating a cargo compartment (C) and a passenger compartment (P) of a vehicle (1), preferably a transport vehicle, the assembly (2) comprising:
rails (3) configured to be mounted to a floor (101) of the vehicle (1);
a base frame (4) attached to the rails (3) and movable in a forward (F) and a rearward (R) direction of the vehicle (1) on said rails (3);
a seating frame pivotally mounted to the base frame (4), and having a seat portion (5) and a backrest portion (6) pivotally connected to the seat portion (5);
a separation panel (8) provided on the rearward facing side of the backrest portion (6) and configured to be movable relative to the backrest portion (6) for closing a gap (G) between a top portion (62) of the backrest portion (6) and a roof (100) of the vehicle (1);
a first retaining element (90), configured to be mounted to the roof (100) of the vehicle (1), with a receiving slot (92A) for receiving a top portion of the separation panel (8);
the assembly (2) having at least a first seating position and a stowed position, wherein:
in the first seating position, the seat and backrest portions (5, 6) are positioned for seating a passenger of the vehicle (1) on the respective seating surfaces (51, 63) thereof, the top portion of the separation panel (8) extends in the receiving slot (92A) of the first retaining element (90), and the base frame (4) is positioned at a first location (L1) along the rails (3); and
in the stowed position, the seat and backrest portions (5, 6) are pivoted relative to the base frame (4) such that their respective seating surfaces (51, 63) substantially face the forward (F) direction, and the base frame (4) is positioned at a stowing location (L3) along the rails (3), which is at a distance from the first location (L1) in the forward (F) direction.

2. Assembly (2) according to claim 1, further comprising:
a second retaining element (91), configured to be mounted to the roof (100) of the vehicle (1) at a distance from the first retaining element (90) in the forward (F) direction, with a receiving slot (92B) for receiving a top portion of the separation panel (8),
the assembly (2) having a second seating position different from the first seating position, wherein:
in the second seating position, the seat and backrest portions (5, 6) are positioned for seating a passenger of the vehicle (1) on the respective seating surfaces (51, 63) thereof, the top portion of the separation panel (8) extends in the receiving slot (92B) of the second retaining element (91), and the base frame (4) is positioned at a second location (L2) along the rails (3) at a distance from the first location (L1) in the forward (F) direction.

3. Assembly (2) according to claim 1 or 2, wherein, in the stowed position, an extension distance between the top portion of the separation panel (8) and top portion (62) of the backrest portion (6) is smaller than the extension distance in the first seating position and/or the second seating position.

4. Assembly (2) according to any of the foregoing claims, wherein the separation panel (8) is movable substantially in parallel to the backrest portion (6).

5. Assembly (2) according to claim 4, wherein the separation panel (8) comprises a housing (80), such that the separation panel (8) is extendible and retractable in said housing (80).

6. Assembly (2) according to any of the foregoing claims, wherein the separation panel (8) is at least partially made of glass or acrylic.

7. Assembly (2) according to any of the foregoing claims, wherein, in the first seating position and/or the second seating position, the seat portion (5) is pivoted relative to the base frame (4), such that its seating surface (51) faces in a substantially upward direction.

8. Assembly (2) according to any of the foregoing claims, further comprising an adjustable headrest (64) mounted to and movable relative to the top portion (62) of the backrest portion (6).

9. Assembly (2) according to any of the foregoing claims, further comprising driving means for moving the base frame (4) in the forward (F) and the rearward (R) direction of the vehicle (1) on the rails (3), preferably wherein the driving means are electrically powered.

10. Assembly (2) according to any of the foregoing claims, further comprising an actuator (7) for pivoting the seating frame relative to base frame (4).

11. Assembly (2) according to any of the foregoing claims, wherein the seat portion (5) of the seating frame further comprises a protection panel (52) configured to extend, in the first seating position and/or the second seating position, between the seat portion (5) and the floor (101) of the vehicle (1).

12. Assembly (2) according to any of the foregoing claims, wherein, in the stowed position, the seat portion (5) is pivoted relative to the base frame (4) such that a bottom surface thereof, opposite its seating surface (51), substantially faces the rearward (R) direction and substantially extends between the backrest portion (6) and the floor (101) of the vehicle (1).

13. Assembly (2) according to any of the foregoing claims, wherein the assembly (2) further has a sleeping position, wherein:
the backrest portion (6) is pivoted in the rearward direction so as to form a substantially flat sleeping surface by means of the seating surfaces of the seat portion (5) and the backrest portion (6), preferably wherein the backrest portion (6) comprises an upper backrest portion which is adjustable, preferably pivotable and/or slidable, relative to the backrest portion (6), so as to elongate the backrest portion in the sleeping position of the assembly (2).

14. A vehicle (1), preferably a transport vehicle having a cargo compartment (C) and a passenger compartment (P), comprising an adjustable partition assembly (2) according to any of the foregoing claims, preferably wherein the vehicle is a light commercial vehicle, and/or preferably wherein the vehicle is an electric vehicle, such as an electric car.

15. The vehicle (1) according to claim 14, wherein the adjustable partition assembly (2) does not have a structural connection with the sidewalls and/or side structure of the vehicle (1).

## Patentansprüche

1. Verstellbare Aufteilungsanordnung (2) zum Trennen eines Frachtraums (C) und eines Fahrgastraums (P) eines Fahrzeugs (1), vorzugsweise eines Transportfahrzeugs, die Anordnung (2) umfassend:
Schienen (3), die konfiguriert sind, um an einem Boden (101) des Fahrzeugs (1) montiert zu werden;
einen Grundrahmen (4), der an den Schienen (3) angebracht ist und in einer vorwärtigen (F) und einer rückwärtigen (R) Richtung des Fahrzeugs (1) auf den Schienen (3) bewegbar ist;
einen Sitzrahmen, der an dem Grundrahmen (4) schwenkbar montiert ist und einen Sitzabschnitt (5) und einen Rückenlehnenabschnitt (6) aufweist, der mit dem Sitzabschnitt (5) schwenkbar verbunden ist;
eine Trennplatte (8), die auf der rückwärtsgerichteten Seite des Rückenlehnenabschnitts (6) bereitgestellt und konfiguriert ist, um relativ zu dem Rückenlehnenabschnitt (6) zum Schließen eines Spalts (G) zwischen einem oberen Abschnitt (62) des Rückenlehnenabschnitts (6) und einem Dach (100) des Fahrzeugs (1) bewegbar zu sein;
ein erstes Halteelement (90), das konfiguriert ist, um an dem Dach (100) des Fahrzeugs (1) montiert zu werden, mit einem Aufnahmeschlitz (92A) zum Aufnehmen eines oberen Abschnitts der Trennplatte (8);
wobei die Anordnung (2) mindestens eine erste Sitzposition und eine verstaute Position aufweist, wobei:
in der ersten Sitzposition, der Sitz- und Rückenlehnenabschnitt (5, 6) zum Hinsetzen eines Fahrgasts des Fahrzeugs (1) auf den jeweiligen Sitzoberflächen (51, 63) davon positioniert sind, der obere Abschnitt der Trennplatte (8) sich in den Aufnahmeschlitz (92A) des ersten Halteelements (90) erstreckt und der Grundrahmen (4) an einer ersten Stelle (L1) entlang der Schienen (3) positioniert ist; und
in der verstauten Position, der Sitz- und Rückenlehnenabschnitt (5, 6) relativ zu dem Grundrahmen (4) derart geschwenkt werden, dass ihre jeweiligen Sitzoberflächen (51, 63) im Wesentlichen der vorwärtigen (F) Richtung zugewandt sind, und der Grundrahmen (4) an einer verstauten Position (L3) entlang der Schienen (3) positioniert ist, die sich in einem Abstand von der ersten Stelle (L1) in der vorwärtigen (F) Richtung befindet.

2. Anordnung (2) nach Anspruch 1, ferner umfassend:
ein zweites Halteelement (91), das konfiguriert ist, um in einem Abstand von dem ersten Halteelement (90) in der vorwärtigen (F) Richtung an dem Dach (100) des Fahrzeugs (1) montiert zu werden, mit einem Aufnahmeschlitz (92B) zum Aufnehmen eines oberen Abschnitts der Trennplatte (8),
wobei die Anordnung (2) eine zweite Sitzposition aufweist, die sich von der ersten Sitzposition unterscheidet, wobei:
in der zweiten Sitzposition, der Sitz- und Rückenlehnenabschnitt (5, 6) zum Hinsetzen eines Fahrgasts des Fahrzeugs (1) auf den jeweiligen Sitzoberflächen (51, 63) davon positioniert sind, der obere Abschnitt der Trennplatte (8) sich in den Aufnahmeschlitz (92B) des zweiten Halteelements (91) erstreckt und der Grundrahmen (4) an einer zweiten Stelle (L2) entlang der Schienen (3) in einem Abstand von der ersten Position (L1) in der vorwärtigen (F) Richtung positioniert ist.

3. Anordnung (2) nach Anspruch 1 oder 2, wobei, in der verstauten Position, ein Auszugsabstand zwischen dem oberen Abschnitt der Trennplatte (8) und dem oberen Abschnitt (62) des Rückenlehnenabschnitts (6) kleiner als der Auszugsabstand in der ersten Sitzposition und/oder der zweiten Sitzposition ist.

4. Anordnung (2) nach einem der vorstehenden Ansprüche, wobei die Trennplatte (8) im Wesentlichen parallel zu dem Rückenlehnenabschnitt (6) bewegbar ist.

5. Anordnung (2) nach Anspruch 4, wobei die Trennplatte (8) ein Gehäuse (80) derart umfasst, dass die Trennplatte (8) in dem Gehäuse (80) ausziehbar und einziehbar ist.

6. Anordnung (2) nach einem der vorstehenden Ansprüche, wobei die Trennplatte (8) mindestens teilweise aus Glas oder Acryl hergestellt ist.

7. Anordnung (2) nach einem der vorstehenden Ansprüche, wobei, in der ersten Sitzposition und/oder der zweiten Sitzposition, der Sitzabschnitt (5) relativ zu dem Grundrahmen (4) derart geschwenkt wird, dass seine Sitzoberfläche (51) in eine im Wesentlichen aufwärtige Richtung gewandt ist.

8. Anordnung (2) nach einem der vorstehenden Ansprüche, ferner umfassend eine verstellbare Kopfstütze (64), die an dem oberen Abschnitt (62) des Rückenlehnenabschnitts (6) montiert und relativ zu diesem bewegbar ist.

9. Anordnung (2) nach einem der vorstehenden Ansprüche, ferner umfassend Antriebsmittel zum Bewegen des Grundrahmens (4) in der vorwärtigen (F) und der rückwärtigen (R) Richtung des Fahrzeugs (1) auf den Schienen (3), wobei die Antriebsmittel vorzugsweise elektrisch betrieben sind.

10. Anordnung (2) nach einem der vorstehenden Ansprüche, ferner umfassend ein Betätigungselement (7) zum Schwenken des Sitzrahmens relativ zu dem Grundrahmen (4).

11. Anordnung (2) nach einem der vorstehenden Ansprüche, wobei der Sitzabschnitt (5) des Sitzrahmens ferner eine Schutzplatte (52) umfasst, die konfiguriert ist, um sich, in der ersten Sitzposition und/oder der zweiten Sitzposition, zwischen dem Sitzabschnitt (5) und dem Boden (101) des Fahrzeugs (1) zu erstrecken.

12. Anordnung (2) nach einem der vorstehenden Ansprüche, wobei, in der verstauten Position, der Sitzabschnitt (5) relativ zu dem Grundrahmen (4) derart geschwenkt wird, dass eine untere Oberfläche davon, gegenüberliegend seiner Sitzoberfläche (51), im Wesentlichen der rückwärtigen (R) Richtung zugewandt ist und sich im Wesentlichen zwischen dem Rückenlehnenabschnitt (6) und dem Boden (101) des Fahrzeugs (1) erstreckt.

13. Anordnung (2) nach einem der vorstehenden Ansprüche, wobei die Anordnung (2) ferner eine Schlafposition aufweist, wobei:
der Rückenlehnenabschnitt (6) in die rückwärtige Richtung geschwenkt wird, um mittels der Sitzoberflächen des Sitzabschnitts (5) und des Rückenlehnenabschnitts (6) eine im Wesentlichen ebene Schlafoberfläche auszubilden, wobei der Rückenlehnenabschnitt (6) vorzugsweise einen oberen Rückenlehnenabschnitt umfasst, der relativ zu dem Rückenlehnenabschnitt (6) verstellbar, vorzugsweise schwenkbar und/oder verschiebbar, ist, um den Rückenlehnenabschnitt in der Schlafposition der Anordnung (2) zu verlängern.

14. Fahrzeug (1), vorzugsweise ein Transportfahrzeug, das einen Frachtraum (C) und einen Fahrgastraum (P) aufweist, umfassend eine verstellbare Aufteilungsanordnung (2) nach einem der vorstehenden Ansprüche, wobei das Fahrzeug vorzugsweise ein leichtes Nutzfahrzeug ist und/oder wobei das Fahrzeug vorzugsweise ein Elektrofahrzeug, wie ein Elektroauto, ist.

15. Fahrzeug (1) nach Anspruch 14, wobei die verstellbare Aufteilungsanordnung (2) keine strukturelle Verbindung mit den Seitenwänden und/oder der Seitenstruktur des Fahrzeugs (1) aufweist.

## Revendications

1. Ensemble de cloisonnement réglable (2) permettant de séparer un compartiment pour des marchandises (C) et un compartiment pour des passagers (P) d'un véhicule (1), de préférence un véhicule de transport, l'ensemble (2) comprenant :
des rails (3) conçus pour être montés sur un plancher (101) du véhicule (1) ;
un cadre de base (4) fixé aux rails (3) et mobile dans une direction avant (F) et une direction arrière (R) du véhicule (1) sur lesdits rails (3) ;
un cadre d'assise monté de manière pivotante sur le cadre de base (4) et comportant une partie de siège (5) et une partie de dossier (6) reliée de manière pivotante à la partie de siège (5) ;
un panneau de séparation (8) situé sur la face arrière de la partie de dossier (6) et conçu pour être mobile par rapport à la partie de dossier (6) afin de fermer un espace (G) entre une partie supérieure (62) de la partie de dossier (6) et un toit (100) du véhicule (1) ;
un premier élément de retenue (90), conçu pour être monté sur le toit (100) du véhicule (1), avec une fente de réception (92A) pour recevoir une partie supérieure du panneau de séparation (8) ;
l'ensemble (2) ayant au moins une première position d'assise et une position de rangement, dans lequel :
dans la première position d'assise, les parties siège et dossier (5, 6) sont positionnées pour asseoir un passager du véhicule (1) sur leurs surfaces d'assise respectives (51, 63), la partie supérieure du panneau de séparation (8) s'étend dans la fente de réception (92A) du premier élément de retenue (90), et le cadre de base (4) est positionné au niveau d'un premier emplacement (L1) le long des rails (3) ; et
dans la position de rangement, les parties siège et dossier (5, 6) sont pivotées par rapport au cadre de base (4) de telle sorte que leurs surfaces d'assise respectives (51, 63) sont sensiblement orientées dans la direction avant (F), et le cadre de base (4) est positionné au niveau d'un emplacement de rangement (L3) le long des rails (3), qui est à une certaine distance du premier emplacement (L1) dans la direction avant (F).

2. Ensemble (2) selon la revendication 1, comprenant en outre :
un second élément de retenue (91), conçu pour être monté sur le toit (100) du véhicule (1) à une certaine distance du premier élément de retenue (90) dans la direction avant (F), avec une fente de réception (92B) permettant de recevoir une partie supérieure du panneau de séparation (8),
l'ensemble (2) ayant une seconde position d'assise différente de la première position d'assise, dans lequel :
dans la seconde position d'assise, les parties siège et dossier (5, 6) sont positionnées pour asseoir un passager du véhicule (1) sur leurs surfaces d'assise respectives (51, 63), la partie supérieure du panneau de séparation (8) s'étend dans la fente de réception (92B) du second élément de retenue (91), et le cadre de base (4) est positionné au niveau d'un second emplacement (L2) le long des rails (3) à une certaine distance du premier emplacement (L1) dans la direction avant (F).

3. Ensemble (2) selon la revendication 1 ou 2, dans lequel, en position de rangement, une distance d'extension entre la partie supérieure du panneau de séparation (8) et la partie supérieure (62) de la partie de dossier (6) est inférieure à la distance d'extension dans la première position d'assise et/ou la seconde position d'assise.

4. Ensemble (2) selon l'une quelconque des revendications précédentes, dans lequel le panneau de séparation (8) est mobile sensiblement parallèlement à la partie de dossier (6).

5. Ensemble (2) selon la revendication 4, dans lequel le panneau de séparation (8) comprend un boîtier (80), de telle sorte que le panneau de séparation (8) est extensible et rétractable dans ledit boîtier (80).

6. Ensemble (2) selon l'une quelconque des revendications précédentes, dans lequel le panneau de séparation (8) est au moins partiellement constitué de verre ou d'acrylique.

7. Ensemble (2) selon l'une quelconque des revendications précédentes, dans lequel, dans la première position d'assise et/ou la seconde position d'assise, la partie de siège (5) est pivotée par rapport au cadre de base (4), de telle sorte que sa surface d'assise (51) est orientée dans une direction sensiblement ascendante.

8. Ensemble (2) selon l'une quelconque des revendications précédentes, comprenant en outre un appui-tête réglable (64) monté sur la partie supérieure (62) de la partie de dossier (6), et mobile par rapport à celle-ci.

9. Ensemble (2) selon l'une quelconque des revendications précédentes, comprenant en outre un moyen d'entraînement permettant de déplacer le cadre de base (4) dans la direction avant (F) et arrière (R) du véhicule (1) sur les rails (3), de préférence dans lequel le moyen d'entraînement est alimenté électriquement.

10. Ensemble (2) selon l'une quelconque des revendications précédentes, comprenant en outre un actionneur (7) permettant de faire pivoter le cadre d'assise par rapport au cadre de base (4).

11. Ensemble (2) selon l'une quelconque des revendications précédentes, dans lequel la partie de siège (5) du cadre d'assise comprend en outre un panneau de protection (52) conçu pour s'étendre, dans la première position d'assise et/ou la seconde position d'assise, entre la partie de siège (5) et le plancher (101) du véhicule (1).

12. Ensemble (2) selon l'une quelconque des revendications précédentes, dans lequel, en position de rangement, la partie de siège (5) est pivotée par rapport au cadre de base (4) de telle sorte qu'une surface inférieure de celle-ci, opposée à sa surface d'assise (51), est sensiblement orientée dans la direction arrière (R) et s'étend sensiblement entre la partie de dossier (6) et le plancher (101) du véhicule (1).

13. Ensemble (2) selon l'une quelconque des revendications précédentes, dans lequel l'ensemble (2) présente en outre une position de couchage, dans lequel :
la partie de dossier (6) est pivotée dans la direction arrière de manière à former une surface de couchage sensiblement plane au moyen des surfaces d'assise de la partie de siège (5) et de la partie de dossier (6), de préférence dans lequel la partie de dossier (6) comprend une partie de dossier supérieure qui est réglable, de préférence pivotante et/ou coulissante, par rapport à la partie de dossier (6), de manière à allonger la partie de dossier dans la position de couchage de l'ensemble (2).

14. Véhicule (1), de préférence un véhicule de transport ayant un compartiment pour des marchandises (C) et un compartiment pour des passagers (P), comprenant un ensemble de cloisonnement réglable (2) selon l'une quelconque des revendications précédentes, de préférence dans lequel le véhicule est un véhicule utilitaire léger, et/ou de préférence dans lequel le véhicule est un véhicule électrique, tel qu'une voiture électrique.

15. Véhicule (1) selon la revendication 14, dans lequel l'ensemble de cloisonnement réglable (2) ne possède pas de liaison structurale avec les parois latérales et/ou la structure latérale du véhicule (1).
